# EUROPEAN PATENT APPLICATION

(11) **EP 1 876 824 A1**
(43) Date of publication of application: **09.01.2008**
(21) Application number: 06014126.4
(22) Date of filing: 07.07.2006
(51) Int. Cl.: H04N 7/01

(54) **Video processing device and method for processing videos**

(71) Applicant: MATSUSHITA ELECTRIC INDUSTRIAL CO., LTD, Kadoma-shi, Osaka-fu 571-8501 (JP)
(72) Inventor: Janssen, Frank, 63225 Langen (DE); Maixeiner, Immo, 55270 Zornheim (DE)
(74) Representative: Gerstein, Hans Joachim

(57) **Abstract**

A videoprocessing device (1) for improving a sequence of digital pictures comprises:
- a first picture processing unit (2) for calculating a first improved picture by use of a first method for picture processing; and
- at least one further picture processing unit (3) for calculating at least on further improved picture by use of at least one further method for picture processing, which differ from the first method for picture processing and from each other.

The video processing device (1) further comprises a fading unit (4) for calculating an improved picture from a weighted combination of the at least first and second improved pictures and a fading function for defining weighting factors for the weighted combination.

## Description

The invention relates to a video processing device for improving a sequence of digital pictures comprising:
- a first picture processing unit for calculating a first improved picture by use of a first method of picture processing, and
- at least one further picture processing unit for calculating at least on further improved picture by use of at least one further method for picture processing, which differ from the first method for picture processing and from each other.

The invention further relates to a method for processing videos to improve the quality of a sequence of digital pictures.

Digital signal processing in general and more particular signal processing in modern TV receivers is a well known field of techniques in the prior art. One of the problems in sequences of digital pictures are the visibility of artefacts of vector driven up conversion algorithms and the quality of motion compensated pictures.

Modern TV receivers use frame-rate or interlaced to progressive conversion (IP-conversion) in order to increase the picture quality by adding additional picture information. The missing picture information is calculated based on several input frames. In scenes with high speed motion the quality of the vector information decreases and annoying artefacts become more and more visible. It is known to add an adaptive field processing to the motion compensation algorithm to avoid these artefacts.

The problem of artefacts occur in several picture improvement algorithms, e.g. frame-rate converter, up-conversion, motion compensated up-conversion etc. Especially, artefacts occur in motion compensated up-conversion LSIs from 50 Hz or 60 Hz to higher frequencies (e.g. 60 Hz, 75 Hz, 90 Hz, 100 Hz, 120 Hz, ...).

The basic condition of motion compensation techniques is, that the input frames, which are used for interpolation, have a different motion phase from the same scene in order to calculate the corresponding motion compensated output frame. Moving objects leads to revealed and obscured areas. In these areas a vector information could not be found, because the corresponding picture content does only exists once. This effect leads to wrong vector information especially at object borders. The size of this undefined area is dependent on the speed of the object.

In the prior art, the output pictures are generated out of different processing methods comprising a motion compensation process and an interpolation process. The transition between these different methods is very annoying, because the algorithm is switched between two adjacent pixels. In areas, where the vector information is wrong, especially in scenes with high speed motion, the area with picture disturbances is very large.

It is therefore an object of the present invention to provide an improved video processing device and method for processing videos to improve the quality of the sequence of digital pictures, especially to decrease the visibility of motion compensated artefacts.

The object is achieved by the video processing device comprising the features of the preamble of claim 1 in that the video processing device comprises a fading unit for calculating an improved picture from a weighted combination of the at least first and second improved pictures and from a fading function for defining weighting factors for the weighted combination.

In contrast to the prior art, where improved pictures are calculated by use of a plurality of different picture processing methods, the two, three, four or more different methods of calculating improved pictures differ from each other. Each of the different methods for picture processing has specific advantages or disadvantages, so that the quality of the resulting pictures differ from each other in dependence of specific features of the input picture data stream. For example, in pictures comprising insufficient picture information due to moving objects, the vector information will be wrong, so that a method for calculating an improved picture by motion compensation results in revealed and obscured areas. On the other hand, the effects will not be as strong when using an interpolation method.

The use of the at least two different methods for picture processing in parallel and combining the resulting at least two improved pictures by use of a fading function results in a further improved picture having a reduced visibility of artefacts.

In a preferred embodiment, the first picture processing unit is provided for calculating additional picture information by use of motion vectors describing the motion of picture elements or picture areas in the sequence of pictures to obtain the first improved picture. Thus, the first method for picture processing is based upon a well known motion compensation technique.

In a further improved embodiment the second motion compensation unit is provided for calculating additional picture information without use of motion vectors describing the motion of picture elements or picture areas in the sequence of pictures to obtain the second improved picture. Thus, the second method differs from the motion compensation method, so that high-speed motion will have a different effect to the picture processing quality than in the motion compensated picture processing method.

The result of the weighted combination of the at least first and second improved pictures can be improved when defining the fading function in dependency of a plurality of control signals. The control signals may be selected from the group of the speed of motion in succeeding pictures and the reliability of motion vectors describing the speed of motion. Additional control signals may be used by the skilled man in order to improve the fading function.

In a further improved embodiment, the second picture processing unit is provided for interpolating pixels of picture or of at least two pictures succeeding in the sequence of pictures. Thus, the second picture processing unit method is performed by pixel interpolation as it is known in the prior art.

The video processing device may be provided for motion compensated up-conversion of a sequence of pictures in order to increase the picture frequency.

This object is further achieved by the method according to claim 9. Preferred embodiments are disclosed in the depending claims.

The invention is hereinafter explained by way of an exemplary embodiment together with the figures. It shows
- Fig. 1 -: block diagram of a video processing device according to a preferred embodiment;
- Fig. 2 -: detailed block diagram of the video processing device and the output filter;
- Fig. 3 -: characteristic of the fading function.

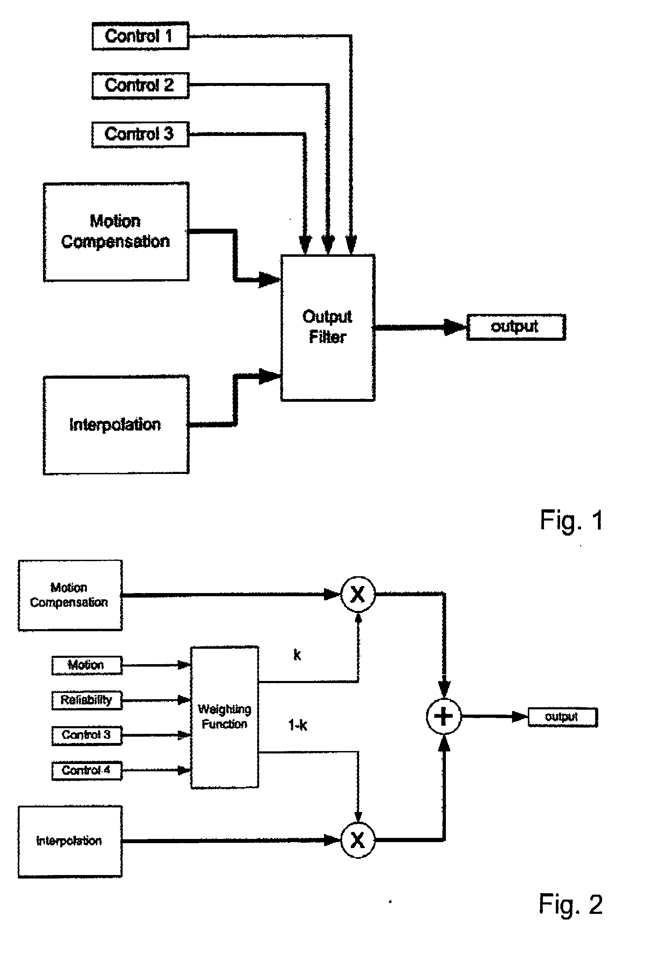

Figure 1 shows a block diagram of a video processing device 1 according to the present invention. A sequence of digital pictures is led into a motion compensation unit 2 provided for calculating addition picture information by use of motion vectors describing the motion of picture elements or picture areas in the sequence of pictures. Such a motion compensation unit 2 is well known in the prior art and needs no further explanation.

The motion compensation unit 2 calculates additional picture information for motion information determined from the motion of picture areas or objects in the pictures in succeeding pictures. The motion information is provided in form of motion vectors, wherein the direction of the motion vector indicates the direction of the motion of the picture area or object and wherein the length of the picture vector indicates a speed of the motion.

Further, the sequence of digital pictures is led into a non-vector based picture processing unit 3 for the complete picture. The non-vector based picture processing unit 3 can be, for example, an interpolation unit for interpolating pixel values to obtain additional picture information.

The output of both first picture processing unit in form of the motion compensation unit 2 and the second picture processing unit 3 is led into an output filter 4 for calculating an improved output 5 for the improved sequence of digital pictures. The output filter 4 is controlled by a plurality of control signals Control_1, Control_2, Control 3. The output filter 4 fade between the different processing methods performed by the at least first and second picture processing unit 2, 3. The fading function is dependent on different control signals. Control signals can be for example the vector information provided by a motion estimation unit, a reliability value of the vector information and/or the pixel difference from the motion compensation unit 2. These at least three control signals are combined to control the fading function for defining the weighting factors for the weighted combination.

Figure 2 shows a detailed block diagram of the video processing device 1 and the output filter 4. In this embodiment, the fading function determines the ratio with which the output picture is generated. Therefore, the fading function provides a weighting factor K upon which the first improved picture provided at the output of the first picture processing unit 2 is weighted in a first multiplier 6a by use of the weighting factor k and the second improved picture at the output of the second picture processing unit 3 is weighted in a second multiplier 6b by the complement value (1-k) of the weighting Factor k, wherein the sum of both weighted first and second improved pictures is calculated in an adder 7 to generate the output picture.

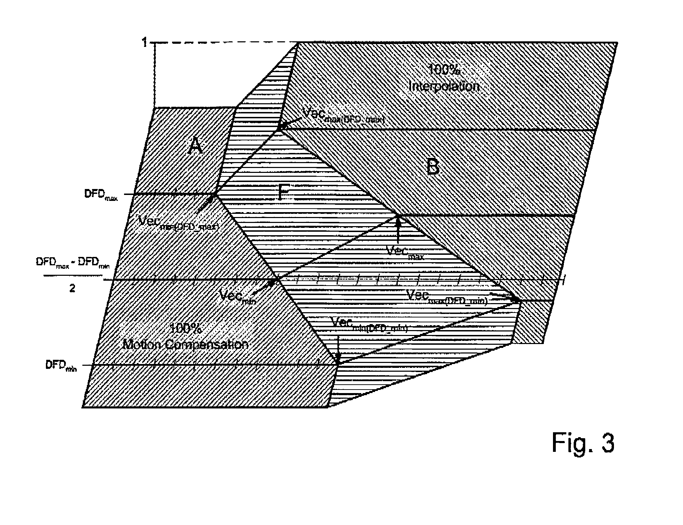

Figure 3 shows a characteristic of the implemented output filter 4. The fading function is dependent on the combined value of the horizontal and vertical motion and the DFD-value from the motion estimation unit 2. The DFD-value is the displaced frame difference. The area A at the left side of the diagram has a weighting value of 0 that means that the motion compensated pixel is used for the output picture. In the case, that the weighting value is 1, the interpolated pixel is used (area B at the right side of the diagram). In the fading area F, the output filter 4 fade between the compensated pixel and the interpolated pixel.

The characteristic shows three lines for a defined minimal DFD-value DFDₘᵢₙ, a defined maximal DFD-value DFDₘₐₓ and the medium DFD-value (DFDₘₐₓ- DFDₘᵢₙ)/2. The weighting factor 1 in the diagram is in a position perpendicular to the maximum of the combined value VECₘₐₓ of the horizontal and vertical motion. Accordingly, the weighting factor 0 starts at the point of the minimal combined value VECₘᵢₙ of the horizontal and vertical motion.

It should be understood, that the input pictures of the output filter 4 are not limited to two. More input pictures can be used like still-image, merged pictures in case of telecine material and a lot more. Also, the number of control signals can be varying and expanded. Further, the number of different processing methods can be more than the two shown in the diagrams.

## Claims

1. Video processing device (1) for improving a sequence of digital pictures comprising:
- a first picture processing unit (2) for calculating a first improved picture by use of a first method for picture processing; and
- at least one further picture processing unit (3) for calculating at least on further improved picture by use of at least one further method for picture processing, which differ from the first method for picture processing and from each other;
**characterized by**
- a fading unit (4) for calculating an improved picture from a weighted combination of the at least first and second improved pictures and from a fading function for defining weighting factors for the weighted combination.

2. Video processing device (1) according to claim 1, **characterized in that** the first picture processing unit (2) is provided for calculating additional picture information by use of motion vectors describing the motion of picture elements or picture areas in the sequence of pictures to obtain the first improved picture.

3. Video processing device (1) according to claim 1 or 2, **characterized in that** the second picture processing unit (3) is provided for calculating additional picture information without use of motion vectors describing the motion of picture elements or picture areas in the sequence of pictures to obtain the second improved pictures.

4. Video processing device (1) according to one of claims 1 to 3 **characterized in that** the fading unit (4) is provided for defining the fading function in dependency of a plurality of control signals.

5. Video processing device (1) according to claim 4, **characterized in that** the control signals are selected from the group of the speed of motion in succeeding pictures and the reliability of motion vectors describing the speed of motion.

6. Video processing device (1) according to one of the preceding claims, **characterized in that** the second picture processing unit (3) is provided for interpolating pixels of a picture or of at least two pictures succeeding in the sequence of pictures.

7. Video processing device (1) according to one of the preceding claims, **characterized in that** the video processing device (1) is provided for motion compensated up-conversion of a sequence of pictures in order to increase the picture frequency.

8. Method for processing videos to improve the quality of a sequence of digital pictures comprising the steps of:
- calculating a first improved picture by use of a first method for picture processing;
- calculating a second improved picture by use of a second method for picture processing, which differs from the first method for picture processing;
**characterized by**
- calculating an improved picture from a weighted combination of the at least first and second improved pictures and from a fading function for defining weighting factors for the weighted combination.

9. Method according to claim 8 **characterized by** calculating additional picture information by use of motion vectors describing the motion of picture elements or picture areas in the sequence of pictures in the first method of picture processing to obtain the first improved picture.

10. Method according to claim 8 or 9, **characterized by** calculating additional picture information without use of motion vectors describing the motion of picture elements or picture areas in the sequence of pictures in the second method for picture processing to obtain the second improved picture.

11. Method according to one of claims 8 to 10, **characterized by** defining the fading function in dependency of a plurality of control signals.

12. Method according to claim 11 **characterized by** defining the fading function in dependency of at least the speed of motion in succeeding pictures and/or the reliability of motion vectors describing the speed of motion.

13. Method according to one of claims 8 to 12, **characterized by** interpolating pixels of a picture or at least two pictures succeeding in the sequence of pictures in the second method for picture processing to obtain the second improved pictures.

14. Method according to one of the claims 9 to 12, **characterized by** motion compensated up-conversion of a sequence of pictures in order to increase the picture frequency.
